Europäisches Patentamt

European Patent Office

Office européen des brevets

(11) Publication number: **0 168 211**
**B1**

## (12) EUROPEAN PATENT SPECIFICATION

(45) Date of publication of patent specification: **20.09.89**

(51) Int. Cl.⁴: **G 01 F 23/60** // B60K15/02

(21) Application number: **85304741.3**

(22) Date of filing: **03.07.85**

(54) **Device for detecting the level of a liquid contained in a tank.**

(30) Priority: **06.07.84 IT 6768684**

(43) Date of publication of application:
**15.01.86 Bulletin 86/03**

(45) Publication of the grant of the patent:
**20.09.89 Bulletin 89/38**

(84) Designated Contracting States:
**DE FR GB SE**

(56) References cited:
**EP-A-0 038 894**
**EP-A-0 055 312**
**FR-A-2 509 044**
**GB-A-2 130 733**
**US-A-4 342 224**

(73) Proprietor: **Ing. C. Olivetti & C., S.p.A.**
**Via G. Jervis 77**
**I-10015 Ivrea (Turin) (IT)**

(72) Inventor: **Guerrini, Giampaolo**
**via Delle Germane, 13**
**I-10015 Ivrea (Turin) (IT)**
Inventor: **Sommacal, Franco**
**Viale Kennedy, 9**
**I-10015 Ivrea (Turin) (IT)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a device for detecting the level of a liquid contained in a tank, as set forth in the introducuory part of claim 1.

Devices of the above mentioned type are known from FR—A—2 509 044, EP—A—0 038 894 and EP—A—0 055 312 and US—A—4 342 224. In each device of the cited references, the float carries one or more contacts which slide on the resistor strip for varying the resistive value between the two terminals of the device, in response to the variation of level of the liquid in the tank. Each device is connectable with a power supply and the output current will represent a measure of the level of liquid.

In FR—A—2 509 044 the longitudinal conductive track is carried by a first insulative bar and the resistive strip is of serpentine shape and is carried by a second bar parallel to the first one.

EP—A—0 038 894 seeks to improve the electrical contact between the resistive strip and the movable contact, by providing the metal element with two flexible tongues to slide on the resistor strip.

EP—A—0 055 312 provides a particular structure of the bar made of aluminium with the surface treated by anodic oxidation and supporting a resistive film manufactured by etching.

US—A—4 342 224 provides the resistive strip to be made by a suitable resistive paste.

All the devices of the prior art have the drawback that the current indicative of the level is subject to errors which increase with the operative life and to risks of interruption in the resistive strip.

The above cited references give a continuous electrical contact between the sliding metal element and its terminal but have not taken in consideration the problem of the wear in the strip of resistive material caused by the sliding with the metallic element of the float and which is a primary reason of the errors during the life of the device.

The technical problem of the present invention is to provide a device for detecting the level of the liquid in a tank which, by obviating the disadantantages of the known devices, is reliable, inexpensive and not subjected to variation of response during its operative life.

The above mentioned problem is solved by the device of the invention which is characterized in the manner set forth in claim 1.

The invention will be described in more detail, by way of example, and with reference to the accompanying drawings, in which:

Fig. 1 is a side view in section of a device according to the invention;

Fig. 2 is another side view of a detail of the device;

Fig. 3 is a section on the line 3—3 in Figure 1; and

Fig. 4 is a section on the line 4—4 in Figure 3.

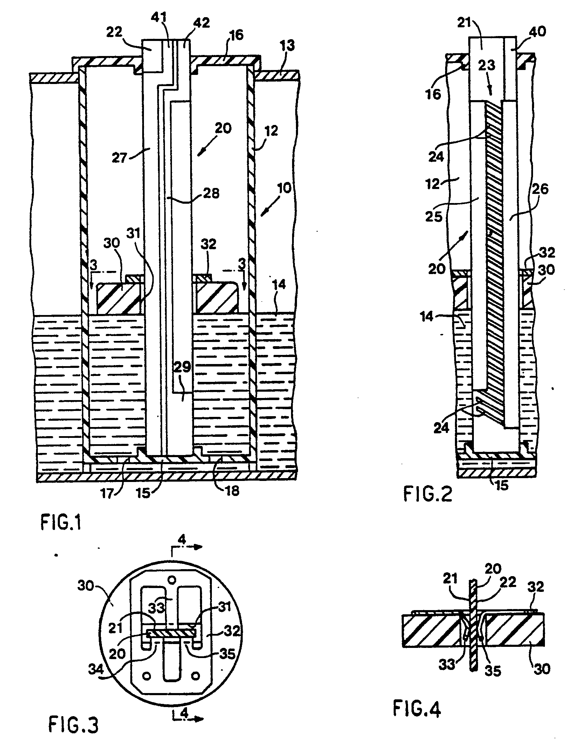

Referring to Figure 1, a device 10 embodying the invention comprises a cylindrical container 12 which is adapted to be inserted inside a tank 13 for detecting the level of the liquid 14 contained therein. The liquid 14, for example, may be the fuel for a motor car or some other vehicle.

The container 12 comprises a side wall, a bottom wall 15 and a top cover 16. In the bottom wall 15 there are formed two apertures 17 and 18 through which the liquid 14 can enter the container 12.

Inside the container 12 is arranged a vertical bar 20 of insulating material, for example glass-reinforced resin, having a rectangular cross-section (Fig. 3) so as to define two opposite major surfaces 21 and 22 parallel to one another.

In accordance with a characteristic of the invention, on the surface 21 (Fig. 2) there is deposited by means of screen process printing, by the same method as is used for producing printed circuits, a variable resistor 23 constituted by two lateral strips 25 and 26 of resistive paste, these strips being interconnected by a plurality of elements 24 of conductive material which are disposed, parallel to one another, substantially transversely of the longitudinal axis of the bar 20.

On the surface 22 (Figs. 1 and 4) of the bar 20, on the other hand, there is deposited a continuous conductive, lateral track 27 and a conductive central track 28 which has a bottom lateral zone 29 having a predetermined height from the bottom wall 15 of the container 12 and, therefore, from the bottom of the tank 13.

A float 30 of plastics material is mounted inside the cylindrical container 12 and is provided with a rectangular slot 31 inside which the bar 20 is inserted. The slot 31 has dimensions such as to permit free sliding of the float 30 with respect to the bar 20 to follow the variations in the level of the liquid 14.

On the top of the float 30 there is fixed a metal element 32 which is shaped in such manner as to have a flexible tongue 33 (Fig. 4) adapted to contact the elements 24 of the variable resistor 23 and two flexible tongues 34 and 35 adapted to contact the conductive track 27 and the bottom lateral zone 29, respectively, of the track 28. The upper ends 40, 41 and 42 of the variable resistor 23 and the conductive tracks 27 and 28, respectively, emerge from the top cover 16 of the cylindrical container 12 and are adapted to be connected to an electric circuit of known type to generate an electrical signal corresponding to the level of the liquid 14 contained in the tank 13.

The device 10 hereinberfore described operates in the following manner.

In any working position, irrespective of the level of the liquid 14 and therefore of the height at which the float 30 is located with respect to the bottom 15 of the cylindrical container 12, the flexible tongue 34 of the metal element 32 is always in contact with the conductive track 27.

When the float 30 is located above the bottom zone 29, the tongue 33 of the element 32 is in contact with one of the elements 24 of the variable resistor 23. In this way, at the ends of the terminals 40 and 41 there is a resistance inversely proportional to the level of the liquid 14. This resistance enables the electric circuit to which the device 10 is connected to generate in known manner an electric signal corresponding to the level of the liquid 14.

On the other hand, when the level of the liquid 14 falls below a predetermined value, corresponding to the height of the bottom zone 29 of the track 28, the tongue 35 of the element 32 comes into contact with this zone 29, thus making the electrical connection between the terminals 41 and 42. In this case, an electric signal indicating that a low level has been reached is generated in any known manner.

The operation of the device 10 hereinbefore described is not affected negatively by possible rocking and/or tilting of the tank 13, the tongues 33, 34 and 35 of the element 32 being always in contact with the respective zones of the bar 20 and there not being other elements which are able to interfere with detection of the level of the liquid 14.

## Claims

1. A device (10) for detecting the level of a liquid (14) contained in a tank (13), comprising a vertical insulative bar (20) inserted in the tank and a float (37) movable up and down the bar to follow the variations in the level of the liquid, a strip (26) of resistive material and a longitudinal conductive track (27) carried by the bar and having two terminals (40, 41) and a metal contact element (32) mounted on the float and adapted to slide on the longitudinal track and to connect a varying section of the strip of resistive material to provide a varying resistive amount between the two terminals corresponding to the level of the liquid in the tank, characterized by a plurality of transverse conductive tracks (24) supported by the bar (20) and disposed parallel to one another and transverse with respect to the bar and having ends electrically connected to different sections of the strip (26) of resistive material, and in that the metal contact element (32) selectively contacts one of the transverse tracks (24) in dependence upon the position of the float (37) determined by the level of the liquid (14).

2. A device according to claim 1, characterized in that the metal element (32) comprises first and second flexible tongues (34, 33) electrically connected to each other to contact simultaneously one transverse conductive track (24) and the longitudinal conductive track (27), respectively.

3. A device according to claim 2, characterized in that the float has a central slot (31) to accommodate with clearance the vertical bar (20), the bar is shaped in such a manner as to define two plane surfaces (21, 22) parallel to one another, and the strip (26) of resistive material is carried by one surface (21) of the bar and the longitudinal conductive track is carried by the other surface (22), and the flexible tongues (33, 34) are mounted on the float opposite each other with respect to the bar to contact the transverse tracks (24) and the longitundinal track (27) on the one and the other surface respectively.

4. A device according to claim 1, 2 or 3, characterized in that the vertical bar (20) comprises a first plane surface (22) on which is deposited the strip (26) of resistive material and in that the transverse conductive tracks (24) are carried by the said first surface (22) adjacent to the strip of resistive material.

5. A device according to any of the preceding claims, characterized in that the insulative bar (20) further comprises a second longitudinal conductive track (28) having a bottom zone disposed at given height from the bottom of the tank and the metal element comprises a third flexible tongue (35) electrically connected with the first and the second tongues (33, 34) to contact the bottom zone (29) of the second longitudinal track (28) when the level of the liquid falls below a given value.

6. A device according to claims 3 and 5, characterized in that the second longitudinal track (28) is supported by the said other surface of the bar (20) and the third flexible tongue (35) is adjacent to the second tongue (34) and opposite to the first tongue (33) with respect to the bar.

7. A device according to any of the preceding claims, characterized in that another longitudinal strip (25) of resistive material is carried by the bar (20) and is connected with at least a portion of the plurality of transverse conductive tracks (24).

8. A device according to claim 7, characterized in that the other strip (25) of resistive material is deposited on the other ends of the transverse conductive tracks (24) and the metal contact element (32) slides on an intermediate portion of the transverse tracks between their ends.

9. A device according to claim 5 or 6 and claim 7 or 8, characterized in that a group of the transverse conductive tracks is disposed adjacent to the bottom zone of the bar and is connected only to one (26) of the two strips of resistive material.

## Patentansprüche

1. Vorrichtung (10) zum Ermitteln des Füllstandes einer Flüssigkeit (14) in einem Tank (13), mit einer vertikalen isolierenden Stange (20), die in den Tank eingeführt ist, und einem Schwimmer (37), der an der Stange auf- und abbewegbar ist, so daß er den Änderungen des Füllstandes folgt, einem Streifen (26) aus Widerstandsmaterial und einer leitenden Längsbahn (27) , die von der Stande getragen wird und zwei Anschlüsse (40, 41) sowie ein Metallkontaktelement (32) aufweist, das an dem Schwimmer angebracht ist und an der Längsbahn entlanggleiten und einen unterschiedlich langen Abschnitt des Streifens aus Widerstandsmaterial anschließen kann, um einen unterschiedlichen Widerstand zwischen den Beiden Anschlüssen zu bilden, der dem Füllstand der Flüssigkeit in dem Tank entspricht, dadurch gekennzeichnet, daß eine Vielzahl sich quer erstreckender leitender Bahnen (24) von der Stange (20) parallel zueinander und quer in bezug auf die Stange getragen werden und Enden aufweisen, die elektrisch mit verschiedenen Abschnitten des Streifens (26) aus Widerstandsmaterial verbunden sind, und daß das Metallkontaktelement (32) wählbar eine der sich quer erstreckenden Bahnen (24) in Abhängigkeit von der durch den Füllstand der Flüssigkeit (14) bestimmten Lage des Schwimmers (37) kontaktiert.

2. Vorrichtung nach Anspruch 1, dadurch gekennzeichnet, daß das Metallelement (32) eine erste und eine zweite flexible Zunge (34, 33) aufweist, die elektrisch miteinander verbunden sind, so daß sie gleichzeitig jeweils eine sich quer erstreckende leitende Bahn (24) und die leitende Längsbahn (27) kontaktieren.

3. Vorrichtung nach Anspruch 2, dadurch gekennzeichnet, daß der Schwimmer eine zentrale Durchgangsöffnung (31) zur Aufnahme der vertikalen Stange (20) mit Spiel aufweist, daß die Stange so geformt ist, daß sie zwei ebene zueinander parallele Oberflächen (21, 22) aufweist, daß der Streifen (26) aus Widerstandsmaterial auf den einen Oberfläche (21) der Stange und die leitende Längsbahn auf der anderen Oberfläche (22) getragen wird und daß die flexiblen Zungen (33, 34) auf dem Schwimmer sich in bezug auf die Stange gegenüberliegend angebracht sind, so daß sie die sich quer erstreckenden Bahnen (24) und die Längsbahn (27) jeweils auf der einen und der anderen Oberfläche kontaktieren.

4. Vorrichtung nach Anspruch 1, 2 oder 3, dadurch gekennzeichnet, daß die vertikale Stange (20) eine erste ebene Oberfläche (22) aufweist, auf der der Streifen (26) aus Widerstandsmaterial aufgebracht ist, und daß die sich quer erstreckenden leitenden Bahnen (24) von der ersten Oberfläche (22) neben dem Streifen aus Widerstandsmaterial getragen werden.

5. Vorrichtung nach einem der vorhergehenden Ansprüche, dadurch gekennzeichnet, daß die isolierende Stange (20) ferner eine zweite leitende Längsbahn (28) mit einem unteren Bereich aufweist, der in einer vorbestimmten Höhe über dem Boden des Tanks liegt, und daß das Metallelement eine dritte flexible Zunge (35) aufweist, die elektrisch mit de ersten und der zweiten Zunge (33, 34) verbunden ist, um den unteren Bereich (29) der zweiten Längsbahn (28) zu kontaktieren, wenn der Füllstand der Flüssigkeit unter einen vorbestimmten Wert fällt.

6. Vorrichtung nach den Ansprüchen 3 und 5, dadurch gekennzeichnet, daß die zweite Längsbahn (28) von der erwähnten anderen Oberfläche der Stange (20) getragen wird und die dritte flexible Zunge (35) neben der zweiten Zunge (34) und in bezug auf die Stange gegenüber der ersten Zunge (33) angeordnet ist.

7. Vorrichtung nach einem der vorhergehenden Ansprüche, dadurch gekennzeichnet, daß ein weiterer Längsstreifen (25) aus Widerstandsmaterial von der Stange (20) getragen wird und mit wenigstens einem Teil der Vielzahl der sich quer erstreckenden leitenden Bahnen (24) verbunden ist.

8. Vorrichtung nach Anspruch 7, dadurch gekennzeichnet, daß der weitere Streifen (25) aus Widerstandsmaterial auf den anderen Enden der sich quer erstreckenden leitenden Bahnen (24) aufgebracht ist und das Metallkontaktelement (32) an einem Zwischenteil der sich quer erstreckenden Bahnen zwischen ihren Enden entlanggleitet.

9. Vorrichtung nach Anspruch 5 oder 6 und Anspruch 7 oder 8, dadurch gekennzeichnet, daß eine Gruppe der sich quer erstreckenden leitenden Bahnen neben dem unteren Bereich der Stange angeordnet und nur mit dem einen (26) der beiden Streifen aus Widerstandsmaterial verbunden ist.

## Revendications

1. Un dipositif (10) pour détecter le niveau d'un liquide (14) contenu dans un réservoir (13), comprenant une barre isolante verticale (20) insérée dans le réservoir et un flotteur (37) mobile sur la barre en montant et en descendant pour suivre les variations du niveau du liquide, une bande (26) de matériau résistant et une piste (27) conductrice longitudinale portée par la barre et possédant deux bornes (40, 41) et un élément de contact métallique (32) monté sur le flotteur et apte à coulisser sur la piste longitudinale et à relier une section variable de la bande de matériau résistant pour réaliser une quantité résistante variable entre les deux bornes correspondant au niveau du liquide dans le réservoir, caractérisé par plusieurs pistes conductrices transversales (24) supportées par la barre (20) et disposées parallèlement l'une à l'autre et à la transversale par rapport à la barre et possédant des extrémités reliées électriquement à différentes sectons de la bande (26) de matériau résistant, et en ce que l'élément métallique de contact (32) vient en contact sélectivement avec l'une des pistes transversales (24) en fonction de la position du flotteur (37) déterminée par le niveau du liquide (14).

2. Un dipositif selon la revendication 1, caractérisé en ce que l'élément métallique (32) comprend des première et deuxième languettes flexibles (34, 33) reliées électriquement l'une à l'autre pour venir en contact simultanément avec une piste conductrice transversale (24) et avec la piste conductrice longitudinale (27), respectivement.

3. Un dipositif selon la revendication 2, caractérisé en ce que le flotteur (3) possède une fente centrale (31) permettant le passage avec un jeu de la barre verticale (20), en ce que la barre est formée de manière à définir deux surfaces planes (21, 22) parallèles l'une à l'autre, et la bande (26) de matériau résistant est supportée par une surface (21) de la barre et la piste conductrice longitundinale est portée par l'autre surface (22), et en ce que les languettes flexibles (33, 34) sont montées sur le flotteur à l'opposé l'une de l'autre par rapport à la barre pour venir en contact avec les pistes transversales (24) et avec la piste longitudinale (27) sur une surface et sur l'autre respectivement.

4. Un dipositif selon la revendication 1, 2 ou 3, caractérisé en ce que la barre verticale (20) comporte une première surface plance (22) sur laquelle est déposée la bande (26) de matériau résistant et en ce que les pistes conductrices transversales (24) sont portées par ladite première surface (22) adjacente à la bande de matériau résistant.

5. Un dispositif selon l'une quelconque des précédentes revendications, caractérisé en ce que la barre isolante (20) comprend en outre une deuxième piste conductrice longitudinale (28) possédant une zone de fond disposée à une hauteur donnée à partir du fond du réservoir et en ce que l'élément métallique comporte une troisième languette flexible (35) reliée électriquement avec la première et al seconde languettes (33, 34) pour venir en contact avec la zone de fond (29) de la deuxième piste conductrice longitudinale (28) quand le niveau du liquide tombe au-dessous d'une valeur donnée.

6. Un dispositif selon les revendications 3 et 5, caractérisé en ce que la deuxième piste longitudinale (28) est supportée par ladite autre surface de la barre (20), et en ce que la troisième languette flexible (35) est adjacente à la deuxième languette (34) et opposée à la première languette (33) par rapport à la barre.

7. Un dispositif selon l'une quelconque des précédentes revendications, caractérisé en ce qu'une autre bande longitudinale (25) de matériau résistant est portée par la barre (20) et en ce qu'elle est reliée avec au moins une partie des multiples piste conductrices transversales (24).

8. Un dipositif selon la revendication 7, caractérisé en ce que l'autre bande (25) de matériau résistant est déposée sur les autres extrémités des pistes conductrices transversales (24) et en ce que l'élément métallique de contact (32) coulisse sur une partie intermédiaire des pistes transversales entre leurs extrémités.

9. Un dispositif selon la revendication 5 ou 6 et la revendication 7 ou 8, caractérisé en ce qu'un groupe des pistes conductrices transversales est disposé adjacent à la zone de fond de la barre et n'est relié qu'à l'une (26) des deux bandes de matériau résistant.

FIG.1

FIG.2

FIG.3

FIG.4